# FASCICULE DE BREVET EUROPEEN

(11) **EP 0 545 740 B1**
(45) Date de publication et mention de la délivrance du brevet: **01.05.1996**
(21) Numéro de dépôt: 92401510.0
(22) Date de dépôt: 03.06.1992
(51) Int. Cl.: E01C 7/26, E01C 19/10, E01C 23/06, C04B 28/02, C08L 95/00

(54) **Procédé de double traitement à froid d'un matériau granulaire destiné à la technique routière**
Verfahren zum Doppelkaltmischen von körnigem Material für den Strassenbau
Process for double cold mixing of granular material for road construction

(30) Priorité: 05.12.1991 FR 9115085
(43) Date de publication de la demande: 09.06.1993
(73) Titulaire: BEUGNET, Société dite, F-75008 Paris (FR)
(72) Inventeur: Sainton, Alain, F-75012 Paris (FR); Bourdel, Didier, Mont Saint Eloi (Pas de Calais) (FR); Pelon, Michel, Martignas Sur Jalle (Gironde) (FR)
(74) Mandataire: Cabinet Pierre HERRBURGER

(56) Documents cités:
- EP-A- 0 274 920
- EP-A- 0 316 752
- EP-A- 0 319 702
- DE-A- 3 729 507
- FR-A- 2 189 579
- FR-A- 2 352 763
- FR-A- 2 595 383
- FR-A- 2 613 737
- FR-A- 2 661 173
- US-A- 4 331 481

## Description

La présente invention concerne un procédé de double traitement à froid d'un matériau granulaire destiné à la technique routière.

Lors de la fabrication d'une chaussée nouvelle, les spécialistes dans le domaine de la technique routière doivent choisir entre deux procédés fondamentalement différents.

Le premier de ces procédés consiste schématiquement à combiner des couches d'assise constituées par l'association de matériaux granulaires et de liants hydrauliques sur lesquelles on peut circuler directement après compactage (graves-ciments, graves laitiers .. jusqu'au béton sec compacté) et une couche de roulement également constituée de matériaux granulaires, mais liés en général à chaud par un liant hydrocarboné ; ces enrobés permettent une circulation immédiate des véhicules, directement après compactage.

Parmi les liants hydrocarbonés chauds (t°C > 100) pouvant être utilisés pour la fabrication des couches de roulement, on peut citer des liants anhydres tels que les bitumes routiers et les brais de houille.

Pour les assises de chaussées, une autre technique consiste à utiliser des matériaux traités à chaud aux liants hydrocarbonés tels que par exemple les graves bitumes qui présentent l'avantage d'avoir une capacité de déformation et donc d'allongement élevée, ce qui signifie qu'ils ne cassent pas ; dans le cas où ces liants hydrocarbonés sont sous forme d'émulsion, les matériaux traités (graves émulsion) sont fabriqués et répandus à froid ; ils présentent cependant la particularité d'avoir des propriétés mécaniques sensibles à la température : ils sont, en effet, fragiles à froid car très durs et mous à haute température. Ces variations entraînent des phénomènes de fluage et d'orniérage qui sont un véritable fléau pour les chaussées.

Le second type de procédé correspond à l'utilisation de matériaux plus fluides qui se mettent en oeuvre par extrusion : ce sont les bétons de ciment qui présentent la particularité d'être plus « raides » à la mise en oeuvre que les bétons utilisés dans l'industrie du bâtiment.

Ces bétons de ciment sont confectionnés dans des centrales de fabrication situées à proximité du chantier, qui peuvent être de type continu ou discontinu, puis transportés jusqu'à celui-ci par des camions ; leur mise en oeuvre requiert un matériel spécifique : les machines à coffrage glissant qui avancent sur des. chenilles et comportent des systèmes clos de caisson munis sur leur surface supérieure d'aiguilles vibrantes électriques ou hydrauliques susceptibles de transférer le béton à l'état liquide (béton pervibré) de façon à lui permettre de prendre la forme recherchée.

La mise en oeuvre d'un tel procédé présente un inconvénient grave : en effet, si on laisse le béton tel quel, il subit un retrait hydraulique ; or, si les forces de retrait sont supérieures à la résistance intrinsèque de béton, il se produit au sein de celui-ci des fissures qui se répartissent de façon aléatoires et donc irrégulière. Il est donc nécessaire de maîtriser ce phénomène de fissuration : dans ce but, on a pris l'habitude, quelques heures après la pose, de scier le béton sur environ le quart de son épaisseur de façon à créer des zones de fragilisation ; ainsi, le béton préalablement coulé en continu se transforme-t-il en une succession de dalles. Les intervalles transversaux entre celles-ci distants de 5 à 6 mètres, sont colmatés avec des joints (barres noires des autoroutes) qui présentent l'inconvénient d'être fragiles et de devoir être refaits fréquemment (environ tous les six à sept ans). De plus, la circulation sur ces joints est bruyante et jugée inconfortable par les usagers.

De plus, malgré leur « répartition » en dalles, les revêtements en béton sont très rigides et dépourvus de capacité de déformation, ce qui fait qu'ils risquent de casser sous l'effet de surcharges et de sous-épaisseurs ; ils sont en outre sensibles aux gradients de températures (dilatation et contraction du béton).

L'avantage de ces revêtements est cependant lié à leurs modules de rigidité très élevés allant de 20 000 à 40 000. MPa (alors qu'ils ne sont que de quelques dizaines de MPa à 15 000 MPa selon la température dans le cas de revêtements traités aux liants hydrocarbonés) et à leur insensibilité à la température dont la conséquence est que ces revêtements ne peuvent donner lieu à des phénomènes de fluage et d'orniérage.

Pour remédier à ces inconvénients des chaussées en béton, on a proposé la technique dite du béton armé continu, conformément à laquelle des fers longitudinaux ronds ou en forme de ruban, distants d'environ 15 cm sont posés sur la chaussée à une hauteur correspondant approximativement à la zone médiane de la dalle, avant coulage de celle-ci.

Cette armature n'a, en fait, aucun effet sur les performances mécaniques de la chaussée compte tenu du fait qu'elle est mise en place dans la zone neutre qui ne travaille ni en compression ni en flexion. Son intérêt est qu'elle permet de maîtriser la rétraction par suite de phénomènes de frottement entre les fers d'armature et le béton ; il se produit, en réalité, une micro-fissuration très fine essentiellement différente de la fissuration anarchique se produisant dans le cas de dalles non armées : on peut ainsi obtenir un béton dit béton armé continu.

La réalisation d'un tel béton présente l'inconvénient d'être très complexe et donc onéreuse ; elle augmente en effet, dans une mesure pouvant être jugée inacceptable, le prix de revient du béton.

L'idée à la base de l'invention est de proposer un procédé de double traitement à froid d'un matériau granulaire destiné à la technique routière de façon à permettre d'assouplir les matériaux traités aux liants hydrauliques ou de rigidifier les matériaux traités aux liants hydrocarbonés, de manière à permettre l'obtention de revêtements ayant des propriétés mécaniques situées entre celles des deux types fondamentaux susmentionnés.

Ce procédé est caractérisé en ce que, dans une première étape, on prépare un prémélange du matériau granulaire et d'un premier liant hydraulique ou hydrocarboné et, dans une seconde étape, on transfère ce prémélange dans des organes de malaxage au niveau desquels on lui ajoute un second liant hydrocarboné ou hydraulique de façon à obtenir un mélange définitif que l'on répand sur une chaussée en chantier, le second liant étant un liant hydraulique si le premier liant est un liant hydrocarboné et inversement un liant hydrocarboné si le premier liant est un liant hydraulique.

Il est à noter que, conformément au document FR-A-2 189 579, on connaît déjà un procédé d'obtention d'une composition destinée à la technique routière qui est constituée par l'association d'un matériau granulaire, d'un liant hydraulique et d'un liant hydrocarboné anhydre et chaud. Ce procédé peut cependant correspondre à deux variantes qui sont elles mêmes essentiellement différentes du procédé susmentionné qui fait l'objet de l'invention ; en effet :
- selon la première de ces variantes, dans une première étape réalisée à froid, on mélange le matériau granulaire et le liant hydraulique, et, dans une seconde étape, on pulvérise un liant hydrocarboné anhydre et chaud sur le prémélange ainsi obtenu ; il est ensuite nécessaire, dans une étape ultérieure qui doit être mise en oeuvre rapidement après pulvérisation du liant hydrocarboné, de refroidir brusquement le mélange définitif notamment à l'aide d'un courant d'air froid, de façon telle qu'une proportion importante du liant hydrocarboné ne précipite pas sur le matériau granulaire préalablement traité au liant hydraulique, mais se subdivise en fines particules avant d'atteindre celui-ci.
- selon la seconde variante, le matériau granulaire est subdivisé en deux parties dont l'une, qui représente 70 à 90 % en poids, est mélangée avec un liant hydraulique, tandis que l'autre, qui représente 30 à 10 % en poids, est mélangée à un liant hydrocarboné. Ces deux parties traitées séparément sont ensuite mélangées. Il ne s'agit clairement pas ici d'un procédé de double traitement du matériau granulaire.

Conformément à l'invention, le premier liant est avantageusement un liant hydraulique tandis que le second liant est un liant hydrocarboné.

On retiendra les liants hydrocarbonés tels les bitumes issus du raffinage du pétrole, les brais de houille, les bitumes fluxés aux huiles de houille ou aux huiles de pétrole, les mélanges bitume/brai de houille ou bitumes/goudron de vapocraquage ou des liants similaires, soit sous forme anhydre soit sous forme d'émulsion aqueuse (émulsionnés avec des agents de surface anioniques, cationiques ou amphotères).

Parmi les liants hydrauliques pouvant être mis en oeuvre, on peut citer, à titre d'exemple, les ciments normalisés, les laitiers de haut-fourneau vitrifiés, les liants routiers composites (cendres volantes, laitiers moulus associés à la chaux pulvérulente ...), les cendres volantes silico-alumineuses (de centrales thermiques) avec ou sans activant, les cendres volantes sulfo-calciques, les fines de laitiers de haut-fourneau ou encore les fines de pouzzolane de schistes houillés avec ou sans activant.

Le matériau granulaire traité conformément à l'invention, peut, dans certains cas particuliers, être un matériau neuf, auquel cas le procédé est mis en oeuvre dans une centrale de fabrication et de malaxage fixe ou mobile, située à proximité du chantier : dans cette centrale, on effectue un prédosage du matériau granulaire, on lui ajoute une quantité déterminée de liant hydraulique sous forme pulvérulente ou sous une autre forme, préalablement dosée pondéralement et combinée à de l'eau d'apport et, le cas échéant, à des additifs, notamment du type plastifiant, entraîneur d'air, ou encore accélérateur ou retardateur de prise, de façon à obtenir le prémélange, et l'on transfère ce dernier dans les organes de malaxage au niveau desquels on lui ajoute le liant hydrocarboné.

Conformément à l'invention, le matériau granulaire traité est, cependant le plus souvent, constitué par un matériau de chaussée fraisé.

Conformément à cette variante préférentielle de l'invention, on répand une couche de liant hydraulique (du ciment par exemple) sur une chaussée, on fraise celle-ci sur une épaisseur de l'ordre de 10 à 50 cm de façon à obtenir le prémélange et l'on transfère ce dernier dans les organes de malaxage au niveau desquels on lui ajoute le liant hydrocarboné, l'eau d'apport et souvent un agent tensio-actif pour faciliter l'enrobage.

Conformément à l'invention, ce dernier liant peut toujours être ajouté soit sous forme anhydre, ce qui présente l'inconvénient d'être onéreux, soit sous forme d'émulsion aqueuse, ce qui est particulièrement avantageux : les qualités propres des émulsions de bitume ont, en effet, été largement démontrées et sont connues depuis déjà de nombreuses années. De plus, dans tous les cas, une telle émulsion peut avantageusement se substituer partiellement à l'eau d'apport.

Conformément à l'invention, dans le cas d'une émulsion de bitume de type cationique (1 ≤ pH < 7) on utilise un agent tensio-actif ou surfactant en solution aqueuse (comme défini dans la Norme Française NFT 73 000 d'avril 1985) obtenu à partir de l'action d'un acide minéral sur des dérivés d'amines grasses (spécialement sélectionnés), qui facilite l'enrobage du bitume autour du mélange agrégats-ciment.

Conformément à l'invention, le malaxage du prémélange et l'addition de liant hydrocarboné peuvent bien entendu être mis en oeuvre dans des centrales de malaxage classiques, fixes ou mobiles situées à proximité du chantier ; un tel processus revient à brancher, sur des machines conçues pour traiter des matériaux tels que des graves ciments, une arrivée de liants hydrocarbonés, le cas échéant, associés à un tensio-actif au niveau du malaxeur.

Selon une caractéristique préférentielle de l'invention, il est cependant possible d'adapter au procédé de double traitement d'un matériau granulaire, des machines existantes qui ont été primitivement mises au point pour le traitement in situ de chaussées vieillies, sont susceptibles de se déplacer sur une chaussée en chantier et sont équipées, à leur partie arrière, de tables et d'organes de finition permettant de répandre le mélange définitif.

Parmi ces machines, on peut, à titre d'exemple, mentionner celle décrite dans le document FR-A-87 05 005 et connue par les professionnels de la construction routière sous le nom d'ATRECOR (marque déposée) : cette machine a été conçue pour la mise en oeuvre d'un procédé de régénération in situ et à froid de couches de roulement en enrobés bitumineux sur une épaisseur inférieure à 15 cm. Elle est schématiquement munie d'une trémie de réception des enrobés à traiter coopérant avec un système de tapis peseurs coopérant avec un double malaxeur longitudinal situé dans une chambre de mélange fermée pourvue d'une arrivée de liants hydrocarbonés anhydres chauds.

Conformément à l'invention, il est possible d'associer une telle machine à un système d'épandage susceptible de répandre sur la chaussée une couche d'un liant hydraulique, et à une fraiseuse classique de nature à fraiser la chaussée jusqu'à une profondeur d'environ 10 à 30 cm, c'est-à-dire non pas seulement la couche de roulement, mais également le cas échéant, des graves et matériaux supports situés au-dessous de celle-ci : cette fraiseuse peut mettre le prémélange en cordon derrière elle ou le déverser directement dans un camion à l'aide d'un tapis transporteur ; ce camion n'aura ensuite plus qu'à reculer pour alimenter le mélange dans la trémie de la machine.

En conséquence, une machine du type ATRECOR peut être utilisée pour la mise en oeuvre de l'invention sans modifier les caractéristiques de celle-ci, si ce n'est en l'alimentant avec le prémélange alors qu'elle avait été primitivement prévue pour le traitement de matériaux neufs, et, le cas échéant, en introduisant au niveau de la chambre de mélange, non pas un liant hydrocarboné anhydre mais une émulsion de bitume en association avec de l'eau d'apport.

Il est à noter qu'il est également possible d'effectuer un mélange graves-ciment préalablement en centrale de malaxage et de verser ce prémélange dans la trémie de la machine.

Une autre machine de traitement in situ pouvant être adaptée à la mise en oeuvre du procédé conforme à l'invention est celle décrite dans les documents FR-A-85 12 724 et FR-A-86 03 362 qui est connue par les spécialistes des techniques routières sous le nom d'ARC 700 (marque déposée).

Cette machine a été conçue pour la mise en oeuvre d'un procédé de retraitement de l'ensemble des couches constitutives d'une chaussée sur une profondeur de l'ordre de 30 cm avec un agent de reconditionnement constitué par un liant hydraulique. Cette machine englobe des organes de répartition sur la chaussée du liant hydraulique de reconditionnement, ainsi qu'un rotor de fraisage transversal qui effectue un prémélange qu'il conduit à un malaxeur longitudinal situé dans une chambre de mélange ouverte, c'est-à-dire dans laquelle les matériaux traités reposent sur le sol.

Conformément à l'invention, il est possible d'adapter cette machine à la mise en oeuvre du procédé de double traitement susmentionné en équipant la chambre de mélange ouverte d'une arrivée d'eau d'apport et de liants hydrocarbonés, soit sous forme anhydre, soit, et de manière préférentielle, sous la forme d'une émulsion aqueuse.

Selon une autre caractéristique de l'invention, il est possible d'incorporer des fibres synthétiques, organiques , minérales ou de type acier ou fonte dans le liant hydrocarboné ajouté au niveau des organes de malaxage. Les avantages liés à l'addition de fibres sont, à titre d'exemple, décrits dans le document FR-A-90 05 564.

Les caractéristiques du procédé qui fait l'objet de l'invention, seront décrites plus en détail à l'aide des exemples mentionnés ci-dessous qui indiquent les propriétés de plusieurs matériaux de chaussée :

### Exemple 1 :

Grave-ciment classique.

On a préparé un mélange de concassé calcaire 0/6 et 6/20 avec le mélange pondéral suivant :

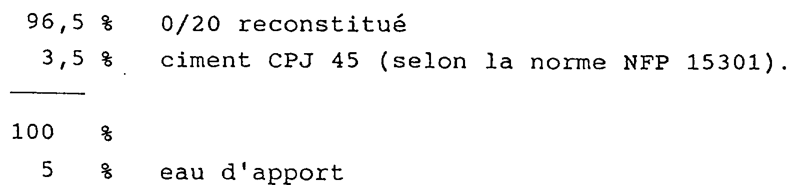

On a confectionné à partir de ce matériau des éprouvettes correspondant à la directive de la Direction des Routes, Ministère des Transports-SETRA-LCPC- Juin 1983 "Réalisation des assises de chaussée en graves traités aux liants hydrauliques". On a effectué des essais d'écrasement à la presse, à une vitesse de 0,1 MPa/s, à 18°C, et, après 7 jours, 28 jours et 90 jours de conservation, on a obtenu les valeurs de la résistance à la compression Rc et du module de rigidité E en MPa rapportées dans le tableau ci-dessous:

**TABLEAU**

| | 7 Jours | 28 Jours | 90 Jours |
|---|---|---|---|
| Rc | 5 | 7 | 11 |
| E | 12 000 | 20 000 | 25 000 |

### Exemple 2 :

Grave émulsion classique.

On a utilisé le même mélange 0/6 et 6/20 de concassé calcaire que dans l'exemple 1 mais avec le mélange pondéral suivant :

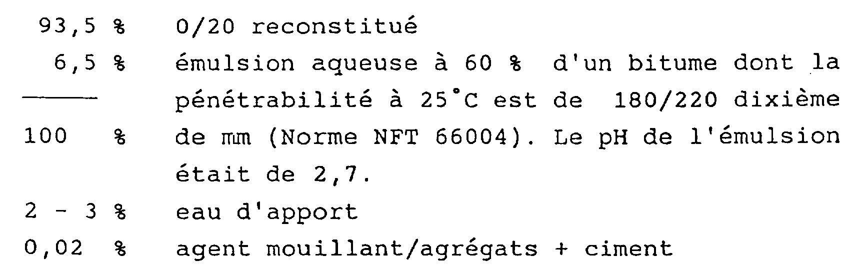

On a confectionné à partir de ce matériau une éprouvette selon la Directive de la Direction des Routes, Ministère des Transports-SETRA-LCPC-Décembre 1974 concernant les graves émulsions.

On a traité cette éprouvette par écrasement à la presse à une vitesse de 1 mm/s à 18°C.

Après 14 jours de conservation, on a obtenu, pour la résistance à la compression Rc, la valeur de 3,5 MPa et pour le module de rigidité la valeur de 2500 MPa, soit environ dix fois moins que dans le cas d'une grave ciment classique.

### Exemple 3 :

Matériaux correspondant à l'invention.

On a fabriqué un mélange de concassé calcaire 0/6 et 6/20 similaire aux exemples 1 et 2, avec le mélange pondéral suivant :

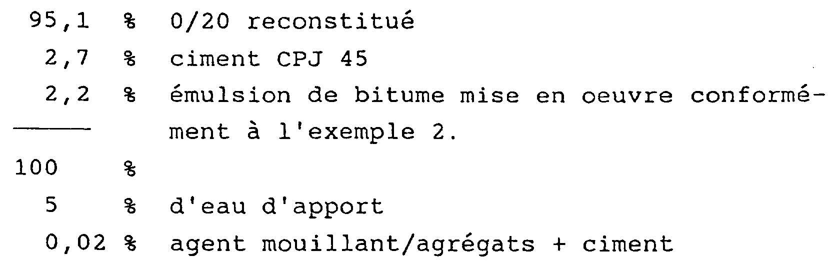

La teneur en eau totale dans le mélange était de 5,8 %.

A partir de ce mélange, on a fabriqué des éprouvettes conformément à l'exemple 1.

On a traité ces éprouvettes par écrasement à la presse à une vitesse de de 0,1 MPa/s à 18°C, et après 7 jours, 28 jours et 90 jours de conservation, on a obtenu les valeurs rapportées ci-dessous, exprimées en MPa, pour la résistance à la compression Rc et le module de rigidité E :

**TABLEAU**

| | 7 Jours | 28 Jours | 90 Jours |
|---|---|---|---|
| Rc | 1,8 | 3,1 | 4,8 |
| E | 3 500 | 7 000 | 9 500 |

Il est clair que ces valeurs se situent entre celles correspondant respectivement aux exemples 1 et 2, par contre la présence de ciment garantit la bonne tenue au fluage de ce matériau aux températures élevées (50-60°C).

### Exemple 4 :

On a fabriqué un béton routier classique contenant pour 1m³ de béton :
- matériau concassé 0/60 : 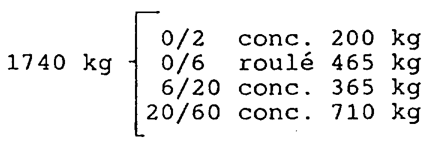
- ciment CPJ 45 : 275 kg
- cendres volantes sèches : 95 kg
- eau : 170-180 litres
- plastifiant : 1,1 kg
- entraîneur d'air (AER) : 0,26 kg

Après 7 jours et 28 jours de conservation, on a obtenu des résistances en flexion RF respectivement égales à 3,6 et 4,5 MPa.

On a ensuite fabriqué un béton conforme à l'invention contenant, pour 1 m³ :
- matériau concassé 0/60 : 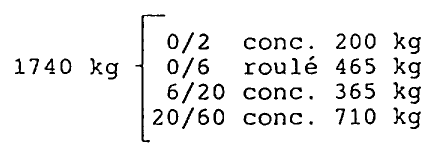
- ciment CPJ 45 : 183 kg
- cendres volantes sèches 60 kg
- émulsion à 60 % d'un bitume 180/220 : 153 kg (idem aux exemples 2 et 3)
- eau d'apport : 100 litres

On a, à nouveau, mesuré la résistance en flexion RF après 7 jours et 28 jours de conservation et on a obtenu des valeurs respectivement égales à 1,8 et 2,2 MPa à 18°C.

Les éprouvettes utilisées dans cet exemple ont également été fabriquées selon la Directive pour la réalisation des chaussées en béton de ciment de mai 1978 - Direction des Routes-SETRA-LCPC-Ministère des Transports.

Les résultats montrent qu'avec l'apport de liant hydrocarbonné en substitution partielle du ciment et de l'eau d'apport, le matériau est moins rigide et donc moins sensible aux phénomènes de retraits hydrauliques et thermiques.

### Exemple 5 :

On a fabriqué un mélange "béton sec compacté" (produit mis en oeuvre comme une "grave ciment").

On utilise toujours le mélange granulaire 0/6 - 6/20 des exemples précédents.

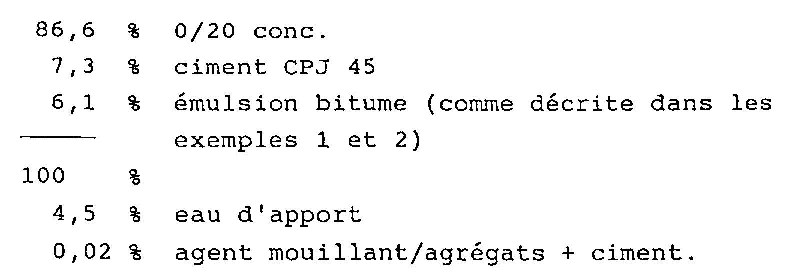

On a fabriqué des éprouvettes comme décrites dans l'exemple 1. Les écrasements ont été effectués par fendage (compression diamètrale des éprouvettes cylindriques) comme dans l'exemple 1.

Après 7 jours et 28 jours de conservation, on a obtenu les valeurs rapportées ci-dessous exprimées en MPa pour la résistance en traction par fendage RTB et le module de rigidité E à 18°C.

**TABLEAU**

| | 7 Jours | 28 Jours |
|---|---|---|
| RTB | 1,0 | 1,6 |
| E | 6 500 | 16 000 |

Par rapport à un "béton sec compacté" à 11 % ciment, les valeurs obtenues sont pratiquement divisées par 2. Le matériau est donc moins rigide et plus déformable.

## Revendications

1. Procédé de double traitement à froid d'un matériau granulaire destiné à la technique routière caractérisé en ce que, dans une première étape, on prépare un prémélange du matériau granulaire et d'un premier liant hydraulique ou hydrocarboné et, dans une seconde étape, on transfère ce prémélange dans des organes de malaxage au niveau desquels on lui ajoute un second liant hydrocarboné ou hydraulique de façon à obtenir un mélange définitif que l'on répand sur une chaussée en chantier, le second liant étant un liant hydraulique si le premier liant est un liant hydrocarboné et inversement un liant hydrocarboné si le premier liant est un liant hydraulique.

2. Procédé selon la revendication 1, caractérisé en ce que le premier liant est un liant hydraulique tandis que le second liant est un liant hydrocarboné.

3. Procédé selon la revendication 2, caractérisé en ce que le liant hydrocarboné est mis en oeuvre sous forme d'une émulsion aqueuse.

4. Procédé selon l'une quelconque des revendications 1 à 3, caractérisé en ce qu'il est mis en oeuvre dans une centrale de fabrication et de malaxage fixe ou mobile située à proximité du chantier.

5. Procédé selon la revendication 4, caractérisé en ce que l'on effectue un prédosage du matériau granulaire, on lui ajoute une quantité déterminée de liant hydraulique sous forme pulvérulente ou autres (granulés ...), préalablement dosée pondéralement et l'on transfère le prémélange ainsi obtenu dans les organes de malaxage au niveau desquels on lui ajoute le liant hydrocarboné et de l'eau d'apport combinée, le cas échéant, à des additifs notamment du type plastifiant ou mouillant entraîneur d'air ou encore accélérateur ou retardateur de prise.

6. Procédé selon l'une quelconque des revendications 1 à 3, caractérisé en ce que l'on répand un liant hydraulique, par exemple du ciment sur une chaussée, on fraise celle-ci sur une épaisseur de l'ordre de 10 à 50 cm de façon à obtenir le prémélange et l'on transfère ce dernier dans les organes de malaxage au niveau desquels on lui ajoute le liant hydrocarboné ainsi que de l'eau d'apport.

7. Procédé selon l'une quelconque des revendications 5 et 6, caractérisé en ce que le liant hydrocarboné est ajouté sous forme d'une émulsion de bitume qui est substituée partiellement au liant hydraulique et à l'eau d'apport.

8. Procédé selon l'une quelconque des revendications 6 et 7, caractérisé en ce que le malaxage et l'addition de liant hydrocarboné et d'eau d'apport sont mis en oeuvre dans une centrale de malaxage fixe ou mobile située à proximité du chantier.

9. Procédé selon l'une quelconque des revendications 6 et 7, caractérisé en ce que le malaxage et l'addition de liant hydrocarboné et d'eau d'apport sont mis en oeuvre in situ dans une machine susceptible de se déplacer sur la chaussée en chantier et d'y répandre le mélange définitif, du type des machines connues en elles mêmes utilisées pour régénérer les couches de roulement de chaussées vieillies à l'aide de liants hydrocarbonés.

10. Procédé selon l'une quelconque des revendications 6 et 7, caractérisé en ce que le fraisage ainsi que le malaxage et l'addition de liant hydrocarboné et d'eau d'apport sont mis en oeuvre in situ dans une machine susceptible de se déplacer sur la chaussée en chantier et d'y répandre le mélange définitif, du type des machines connues en elles mêmes utilisées pour reconditionner les différentes couches constitutives des chaussées vieillies à l'aide de liants hydrauliques.

11. Procédé selon l'une quelconque des revendications 2 à 10, caractérisé en ce que l'on incorpore des fibres synthétiques, minérales, organiques ou de type acier ou fonte dans le liant hydrocarboné ajouté au niveau des organes de malaxage.

12. Procédé selon l'une quelconque des revendications 5, 6 et 7, caractérisé en ce que l'émulsion est une émulsion de bitume cationique, anionique ou amphotère.

13. Procédé selon l'une quelconque des revendications 5, 6 et 7, caractérisé en ce que l'émulsion de bitume est confectionnée à l'aide d'un tensio-actif en solution aqueuse obtenu à partir de l'action d'un acide minéral sur des dérivés d'amines grasses sélectionnées, qui facilite l'enrobage du bitume autour du mélange agrégats/bitume.

## Patentansprüche

1. Verfahren zum doppelten Kaltbehandeln eines kömigen Materiales für den Straßenbau, dadurch gekennzeichnet, daß in einer ersten Stufe ein Vorgemisch aus dem körnigen Material und einem ersten wässrigen oder Kohlenwasserstoff-Bindemittel hergestellt wird, daß in einer zweiten Stufe das Vorgemisch in Knetorgane überführt wird, wobei ein zweites wässriges oder Kohlenwasserstoff-Bindemittel zugeführt wird, um ein Endgemisch zu erhalten, das auf eine Straße an der Baustelle ausgebreitet wird, und daß das zweite Bindemittel dann ein wässriges Bindemittel ist, wenn das erste Bindemittel ein Kohlenwasserstoff-Bindemittel ist, und umgekehrt, ein Kohlenwasserstoff-Bindemittel, wenn das erste Bindemittel ein wässriges Bindemittel ist.

2. Verfahren nach Anspruch 1, dadurch gekennzeichnet, daß das erste Bindemittel ein wässriges Bindemittel ist, während das zweite Bindemittel ein Kohlenwasserstoff-Bindemittel ist.

3. Verfahren nach Anspruch 2, dadurch gekennzeichnet, daß das Kohlenwasserstoff-Bindemittel in Gestalt einer wässrigen Emulsion eingebracht wird.

4. Verfahren nach einem der Ansprüche 1 bis 3, dadurch gekennzeichnet, daß es in einer ortsfesten oder beweglichen Zentrale zum Herstellen und Kneten durchgeführt wird, angeordnet in der Nähe der Baustelle.

5. Verfahren nach Anspruch 4, dadurch gekennzeichnet, daß eine Vordosierung des körnigen Materiales vorgenommen wird, das eine bestimmte Menge des wässrigen Bindemittels in pulvriger oder anderer Form (granuliert) beigefügt wird, die zuvor gewichtsmäßig dosiert wird, daß das derart erhaltene Vorgemisch zu den Knetorganen überführt wird, denen das wässrige Bindemittel zugeführt wird, sowie ggf. mit Wasser kombinierte Zuschlagstoffe, vorzugsweise Weichmacher oder Befeuchtungsmittel oder Lufteinzugsmittel oder Beschleuniger bzw. Verzögerer des Abbindens.

6. Verfahren nach einem der Ansprüche 1 bis 3, dadurch gekennzeichnet, daß ein hydraulisches Bindemittel, beispielsweise Zement, auf einer Straße ausgebreitet wird, daß diese auf eine Stärke in der Größenordnung von 10 bis 50 cm abgefräst wird, um ein Vorgemisch zu erhalten, und daß das letztgenannte Knetorganen zugeführt wird, denen das Kohlenwasserstoff-Bindemittel sowie Zusatzwasser zugeführt wird.

7. Verfahren nach einem der Ansprüche 5 oder 6, dadurch gekennzeichnet, daß das Kohlenwasserstoff-Bindemittel in Form einer Bitumenemulsion zugeführt wird, die teilweise das wässrige Bindemittel und das Zusatzwasser ersetzt.

8. Verfahren nach einem der Ansprüche 6 oder 7, dadurch gekennzeichnet, daß das Kneten sowie das Zufügen von Kohlenwasserstoff-Bindemittel und Zusatzwasser in einer stationären oder mobilen Knetzentrale durchgeführt werden, die sich im Bereich der Baustelle befindet.

9. Verfahren nach einem der Ansprüche 6 oder 7, dadurch gekennzeichnet, daß das Kneten sowie das Zugeben von Kohlenwasserstoff-Bindemittel und Zusatzwasser an Ort und Stelle in einer Maschine durchgeführt werden, die auf der Straße an der Baustelle verfahren und das Endgemisch dort ausbreiten kann, von jener Maschinenart, die an sich bekannt ist und die dazu verwendet wird, um verschlissene Straßenbeläge mit Hilfe von Kohlenwasserstoff-Bindemitteln aufzuarbeiten.

10. Verfahren nach einem der Ansprüche 6 oder 7, dadurch gekennzeichnet, daß das Fräsen wie auch das Kneten sowie die Zugabe von Kohlenwasserstoff-Bindemittel und Zusatzwasser an Ort und Stelle in einer Maschine durchgeführt werden, die dazu geeignet ist, auf der Straße an der Baustelle zu verfahren und dort das Endgemisch auszubreiten, von jener Bauart, die an sich bekannt ist und die dazu verwendet wird, die verschiedenen Beläge, aus denen abgefahrene Straßen bestehen, mit Hilfe wässriger Bindemittel zu rekonditionieren.

11. Verfahren nach einem der Ansprüche 2 bis 10, dadurch gekennzeichnet, daß synthetische Fasern, Mineralfasern, organische Fasern oder Stahl- oder Gußfasern dem Kohlenwasserstoff-Bindemittel an den Knetorganen zugegeben werden.

12. Verfahren nach einem der Ansprüche 5, 6 oder 7, dadurch gekennzeichnet, daß die Emulsion eine kationische, anionische oder amphortere Emulsion ist.

13. Verfahren nach einem der Ansprüche 5, 6 oder 7, dadurch gekennzeichnet, daß die Bitumenemulsion hergestellt wird mit Hilfe eines Tensids in wässriger Lösung, erhalten durch das Zusammenwirkung einer Mineralsäure und ausgewählten Aminofett-Derivaten zum Erleichtern des Einhüllens des Bitumens in der Mischung aus körnigem Material und Bitumen.

## Claims

1. Process of double cold treatment of a granular material intended for road technology, characterised in that, in a first stage, a premixture of granular material and a first hydraulic binder or asphalt binder is prepared and, in a second stage, this premixture is transferred into mixing members, where a second asphalt or hydraulic binder or hydraulic binder is added in such a manner as to obtain a final mixture which is poured onto a road on which work is being carried out, the second binder being a hydraulic binder if the first binder is an asphalt binder and, conversely, an asphalt binder if the first binder is a hydraulic binder.

2. Process according to Claim 1, characterised in that the first binder is a hydraulic binder whereas the second binder is an asphalt binder.

3. Process according to Claim 2, characterised in that the asphalt binder is used in the form of an aqueous emulsion.

4. Process according to any one of Claims 1 to 3, characterised in that it is performed in a stationary or mobile mixing and manufacturing unit in the vicinity of the works site.

5. Process according to Claim 4, characterised in that a predosage of granular material is provided, a predetermined quantity of hydraulic binder which is in pulverised or other (granulated, etc), form, and has previously been dosed by weight, is added thereto, and the premixture thus obtained is transferred into mixing members in the vicinity of which the asphalt binder and the added water, which are, if required, combined with additives, in particular of the plasticizing or wetting, air-entraining type, or even an accelerating agent or retarding agent, are added.

6. Process according to any one of Claims 1 to 3, characterised in that a hydraulic binder is poured, for example on a cement on a road, which is ground to a thickness of the order of from 10 to 50 cm in such a manner as to obtain the premixture and this latter is transferred into the mixing members, where the asphalt binder is added thereto, together with the added water.

7. Process according to either one of Claims 5 and 6, characterised in that the asphalt binder is added in the form of an emulsion of bitumen which is partially substituted with hydraulic binder and with added water.

8. Process according to any one of Claims 6 and 7, characterised in that the mixing and the addition of the asphalt binder and the added water are performed in a stationary or mobile mixing unit situatea in the vicinity of the work site.

9. Process according to any one of Claims 6 and 7, characterised in that the mixing and the addition of the asphalt binder and the added water are performed in situ in a machine which is capable of being displaced on the road on which work is being performed and of pouring the finished mixture onto it, of the type of machine, known per se, which is used for resurfacing old road layers using asphalt binders.

10. Process according to either one of Claims 6 and 7, characterised in that the grinding and the mixing and the addition of the asphalt binder and the added water are performed in situ in a machine which can be displaced on the road on which work is being carried out and of pouring the final mixture onto it, of the type of machine, known per se, which is used to recondition the various layers making up the old roads using hydraulic binders.

11. Process according to any one of Claims 2 to 10, characterised in that synthetic, mineral or organic fibres or fibres of the steel or iron type are incorporated into the asphalt binder added at the mixing members.

12. Process according to any one of Claims 5, 6 and 7, characterised in that the emulsion is an emulsion of cationic, anionic or amphoteric bitumen.

13. Process according to any one of Claims 5, 6 and 7, characterised in that the emulsion of bitumen is assembled using a surfactant in aqueous solution obtained from the action of a mineral acid on selected fatty amine derivatives, which facilitates the coating of the bitumen around the aggregates/bitumen mixture.
